# EUROPÄISCHE PATENTANMELDUNG

(11) **EP 0 594 891 A1**
(43) Veröffentlichungstag der Anmeldung: **04.05.1994**
(21) Anmeldenummer: 92118623.5
(22) Anmeldetag: 30.10.1992
(51) Int. Cl.: H02P 8/00

(54) **Verfahren zur Beseitung des instabilen Betriebszustandes eines Schrittmotors**

(71) Anmelder: SIEMENS AKTIENGESELLSCHAFT, D-80333 München (DE)
(72) Erfinder: Brasseur, Georg, Dipl.-Ing. Dr. techn., A-1130 Wien (AT) (AT); Trefalt, Manfred, Dipl.-Ing. Dr., A-1060 Wien (AT); Noichl, Andreas, Dipl.-Ing., A-1150 Wien (AT); Turba, Roman, Dipl.-Ing., A-1190 Wien (AT)

(57) **Zusammenfassung**

Der Schrittmotor steht mit einer Stelleinrichtung in Verbindung, deren Lage über einen Lagerückmelder ermittelbar ist, wobei im stabilen Betriebszustand des Schrittmotors die Ansteuerung des Schrittmotors durch ein Steuerverfahren vorgenommen wird. Weicht die Rotorposition von der Position des Feldvektors im instabilen Zustand innerhalb einer höchstzulässigen Grenze (Fanggrenze) ab, wird aufgrund der Information des Lagerückmelders die Rotorposition und die aktuelle Rotorgeschwindigkeit ermittelt. Aus diesen Daten wird ein Feldvektor ermittelt, das System schaltet auf Fangbetrieb um und der Feldvektor wird einmalig auf die Position des Rotors gesetzt. Danach kehrt das System in den gesteuerten Betrieb zurück. Dadurch, daß ein gewisser instabiler Bereich der Momentenkennlinie des Schrittmotors zugelassen wird, werden die Genauigkeitsanforderungen an den Lagerückmelder verringert.

## Beschreibung

Die Erfindung betrifft ein Verfahren zur Beseitigung des instabilen Betriebszustandes eines Schrittmotors gemäß dem Oberbegriff von Anspruch 1.

Durch die EP 0 285 868 ist eine Einrichtung zur Steuerung der Ansaugluft einer Brennkraftmaschine bekannt, bei der zur Positionierung der Drosselklappe ein Schrittmotor verwendet wird. Der Schrittmotor ist mechanisch starr mit der Welle der Drosselklappe gekoppelt. Es ist eine Rückholfeder vorgesehen, um die Drosselklappe in die Schließstellung zu bewegen. Der aktuelle Lageistwert der Drosselklappe bzw. des Schrittmotors wird über einen Lagerückmelder beispielsweise ein Potentiometer mit einem Lagesollwert verglichen, wobei die gewünschte Position dann über eine Stelleinrichtung eingestellt wird. Diese bekannte Einrichtung weist somit einen geschlossenen Regelkreis auf.

Durch die obenerwähnte EP 0 285 868 ist es weiterhin bekannt, je nach der Drehzahl des Schrittmotors eine Steuerung des Schrittmotors in Grob- und Feinschritten vorzunehmen. Die Feinschrittsteuerung wird insbesondere im Leerlaufbetrieb vorgenommen, wobei hier eine reine Steuerung verwendet wird, da die Leerlaufdrehzahl anderweitig geregelt wird. Bei Grobschrittbetrieb wird wegen der damit erzielbaren hohen Verstellgeschwindigkeit ein Regelkreis eingeschaltet.

Durch die DE-OS 33 09 433 ist es weiterhin bekannt, zur Positionierung eines Typenrades einer Schreibeinrichtung einen Schrittmotor zu verwenden. Eine ein Drehfeld erzeugende Einrichtung, die einen Regelkreis aufweist, ist derart ausgebildet, daß abhängig vom Zielpunkt der Schrittmotor beschleunigt und in der Bremsphase gemäß einer Bremskennlinie abgebremst wird. Während einer Teilphase der Beschleunigungsphase werden die Bremskennlinienwerte über die Beschleunigungswerte ermittelt und in einen Bremskurvenspeicher eingeschrieben.

Wegen des beim geschlossenen Regelkreis erforderlichen höheren Aufwandes sowie des toleranzbehafteten Lagerückmelders, an den sehr hohe Genauigkeitsanforderungen zu stellen sind, ist eine offene Steuerkette ohne Lagerückmeldung wünschenswert. Dies bedingt eine genaue Beherrschung des statischen und dynamischen Verhaltens des Schrittmotors, um eine optimale Leistung bei absoluter Schrittsicherheit zu erzielen.

Schrittmotore haben einen mehrdeutigen Zusammenhang ihrer Drehmomentenkennlinie über den Lastwinkel zur absoluten Position des Rotors. Durch Überschreiten des maximalen Haltemomentes kann es zu einem Kippen des Schrittmotors kommen. In diesem sogenannten instabilen Bereich werden dann Schritte verloren, so daß kein eindeutiger Zusammenhang mehr zwischen dem Feldvektor des Drehfeldes und der Position des Rotors besteht.

Bisher wurde dieses Problem durch Überdimensionierung bei rein gesteuertem Betrieb bzw. im geregelten Betrieb durch einen Lagerückmelder gelöst.

Es ist Aufgabe der vorliegenden Erfindung, ein Verfahren anzugeben, mit dem der instabile Betriebszustand des Schrittmotors beseitigt wird, wenn die Abweichung der Position des Rotors von der Position des Feldvektors eine höchst zulässige Grenze erreicht.

Diese Aufgabe wird erfindungsgemäß durch den Patentanspruch 1 gelöst. Vorteilhafte Weiterbildungen sind in den Unteransprüchen gekennzeichnet.

Durch das Verfahren nach der Erfindung wird nun gezielt ein instabiler Zustand zugelassen, der durch einmaliges Setzen des Feldvektors auf die Position des Rotors korrigiert wird, wobei das Setzen durch entsprechende Ausgabe der Ströme für die Teilwicklungen des Schrittmotors vorgenommen wird, die dem Winkel der Rotorposition entsprechen. Damit ist der Rotor wieder im stabilen Bereich der Kennlinie. Es wird somit erlaubt, den gesamten Bereich der Drehmomentenkennlinie des Schrittmotors vom statisch stabilen Bereich bis hin zum dynamisch stabilen Bereich auszunützen. Das Verlassen dieses Nutzbereichs wird durch den Lagerückmelder ermittelt und in einer Monitoreinrichtung ausgewertet. Der Lagerückmelder kann nun aufgrund des vergrößerten Nutzbereichs mit einer größeren Toleranz beaufschlagt sein, ohne daß eine falsche Instabilität erkannt wird.

Durch das Setzen des Feldvektors auf die Positon des Rotors entsteht für einen Augenblick ein stabiler Zustand. Aufgrund der kinetischen Energie läuft der Rotor in eine bremsende Momentenzeitfläche hinein, wodurch ein Lastwinkel entsteht, der durch ein geeignetes Steuerverfahren bis in den Zielpunkt innerhalb des statisch stabilen Bereichs geführt wird.

Die Rotorposition wird meßtechnisch über einen Lagerückmelder ermittelt. Die Geschwindigkeit errechnet sich aus der Differenz der Positionen zwischen zwei oder mehreren Abtastzeitpunkten. Die letzten Geschwindigkeitspositionen werden daher in einem Ringspeicher mitgeschrieben.

Wenn das Verfahren nach der Erfindung mehrmals durchlaufen wird, d.h., daß das Fangen nicht zum Erfolg führt, liegt eine dauerhafte Störung vor, und es kann eine entsprechende Reaktion veranlaßt werden, die beispielsweise aus Änderungen bei der Steuerung bestehen können.

Bei der Erzeugung des Drehfeldes für die Positionierung, d.h. die Steuerung des Feldvektors des Schrittmotors wird, abgesehen von statischen Fehlern (z.B. beim Lagerückmelder), bei dynamischer Schrittfortschaltung zusätzlich ein Phasenfehler gemacht. Ein Phasenfehler entsteht u.a. durch die Induktivität der Teilwicklungen des Schrittmotors, wodurch der Stromanstieg begrenzt ist. Das heißt, die Steuerung des Schrittmotors geht nicht unendlich schnell vonstatten, sondern sie wird durch Einflußgrößen verzögert. Eine weitere Einflußgröße bildet die Totzeit des Systems, nämlich die Zeitdifferenz zwischen dem Ansprechen des Monitorsystems und der Ausgabe eines neuen Feldvektors. Eine weitere Einflußgröße wird durch die Versorgungsspannung des Schrittmotors gebildet, die beispielsweise die Batteriespannung eines Kraftfahrzeugs sein kann und Schwankungen unterworfen sein kann.

Alle diese Einflußgrößen sind bekannt bzw. können meßtechnisch erfaßt werden und können daher bei der Lagebestimmung für den neuen Feldvektor durch einen Korrekturwert berücksichtigt werden. Der Korrekturwert wird zweckmäßigerweise in einem Kennlinienfeld im Rechner abgelegt, so daß er entsprechend einer bestimmten Einflußgröße sofort zur Verfügung steht, um die Position des Feldvektors entsprechend zu korrigieren.

Im folgenden sei die Erfindung anhand von drei Figuren näher erläutert.

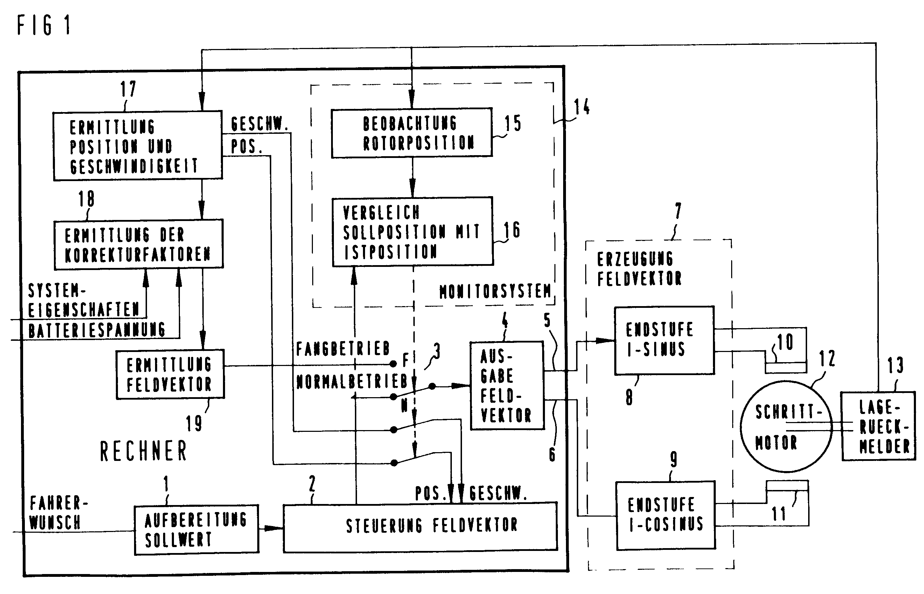

Es zeigen
Fig. 1 ein Blockschaltbild zur Erklärung des Verfahrens anhand einer Vorrichtung zur Beseitigung des instabilen Zustandes bei einem Schrittmotor
Fig. 2 ein Kreisdiagramm zur Erklärung des Fangvorgangs
Fig. 3 ein Flußdiagramm zur Phasenkompensation
Das in Fig. 1 dargestellte Blockschaltbild zeigt eine Vorrichtung, die einen Rechner aufweist, der mit verschiedenen Eingangsgrößen wie einem Fahrerwunsch bei einem Kraftfahrzeug, beispielsweise mit dem Signal einer bestimmten Gaspedalstellung, der Batteriespannung und verschiedenen Systemeigenschaften beaufschlagt wird. Im Rechner wird der Fahrerwunsch, der einem Sollwert entspricht, in einer Einrichtung 1 zur Aufbereitung des Sollwertes digital aufbereitet und einer Einrichtung 2 zur Steuerung des Feldvektors zugeführt. Über eine Schaltereinrichtung 3 wird der Ausgang der Einrichtung 2 zu einer Ausgabeeinheit 4 für den Feldvektor geführt. Dabei verbindet die Schaltereinrichtung 3 die Ausgabeeinheit 4 mit der Steuereinheit 2, was den Normalbetrieb (Signalpfad N) andeuten soll. Die Ausgänge 5 und 6 der Ausgabeeinheit 4 werden an eine Einrichtung 7 zur Erzeugung des Feldvektors geführt, wobei der Ausgang 5 an eine Endstufe 8 zur Bildung eines sinusförmigen Stroms und der Ausgang 6 an eine Endstufe zur Bildung eines kosinusförmigen Stroms 9 geführt sind. Diese Endstufen 8 und 9 sind in der Einrichtung 7 zur Erzeugung des Feldvektors angeordnet. Mit den beiden Strömen werden entsprechend dem gewünschten Feldvektor die beiden Teilwicklungen 10 und 11 des Schrittmotors entsprechend angesteuert, so daß der Schrittmotor 12 die Sollwertstellung einnimmt. Der Schrittmotor 12 ist mit einem Lagerückmelder 13 verbunden, wobei die Lage des Rotors des Schrittmotors 12 gemessen wird. Eine anschließende Beobachtung oder Überwachung der Rotorposition wird in einer als Monitorsystem bezeichneten Einrichtung 14 vorgenommen, wobei im Monitorsystem 14 in einer Einrichtung 15 die Position des Rotors berechnet wird und in einer weiteren mit dieser verbundenen Einrichtung 16 ein Vergleich der Sollposition mit der Istposition des Rotors vorgenommen wird.

Parallel dazu wird die durch den Lagerückmelder abgegebene Information einer Einrichtung 17 im Rechner zugeführt, die die Position und die Geschwindigkeit des Rotors ermittelt. Eine weitere im Rechner vorhandene Einrichtung 18 zur Ermittlung der Korrekturfaktoren steht mit der Einrichtung 17 in Verbindung, wo die von der Einrichtung 17 ermittelte Geschwindigkeit und Position des Rotors aufgrund der Systemeigenschaften und gegebenenfalls der Batteriespannung korrigiert wird. Der gewünschte Feldvektor wird in einer weiteren im Rechner angeordneten Einrichtung 19 ermittelt und dem Signalpfad F (Fangbetrieb) der Schaltereinrichtung 3 zugeführt.

Wird nun in der Einrichtung 16 beim Vergleich zwischen Ist- und Sollwert des Rotors festgestellt, daß diese Werte ein Höchstmaß der Abweichung aufweisen, d.h., daß die Fanggrenze erreicht ist und der Schrittmotor instabil geworden ist, schaltet die Schaltereinrichtung 3 auf den Signalpfad F um. Damit wird der in der Einrichtung 19 zur Ermittlung des Feldvektors ermittelte Wert über die Schaltereinrichtung 3 der Einrichtung 4 zur Ausgabe eines neuen Feldvektors zugeführt, d.h. der Feldvektor wird auf die Position des Rotors gesetzt, wobei die obengenannten Korrekturfaktoren berücksichtigt sind. Gleichzeitig schaltet die Schaltereinrichtung 3 die von der Einheit 17 ermittelten Größen Position und Geschwindigkeit des Rotors an die Steuereinheit 2 durch. Dieser Vorgang findet ein einziges Mal statt. Danach schaltet die Schaltereinrichtung 3 wieder in die Normalstellung um, und mit den ermittelten Momentanwerten für die Geschwindigkeit und die Position aus der Einrichtung 17, die der Einrichtung 2 für die Steuerung des Feldvektors zugeführt werden, wird der Feldvektor so gesteuert, daß der Rotor des Schrittmotors in den Zielpunkt gelangt.

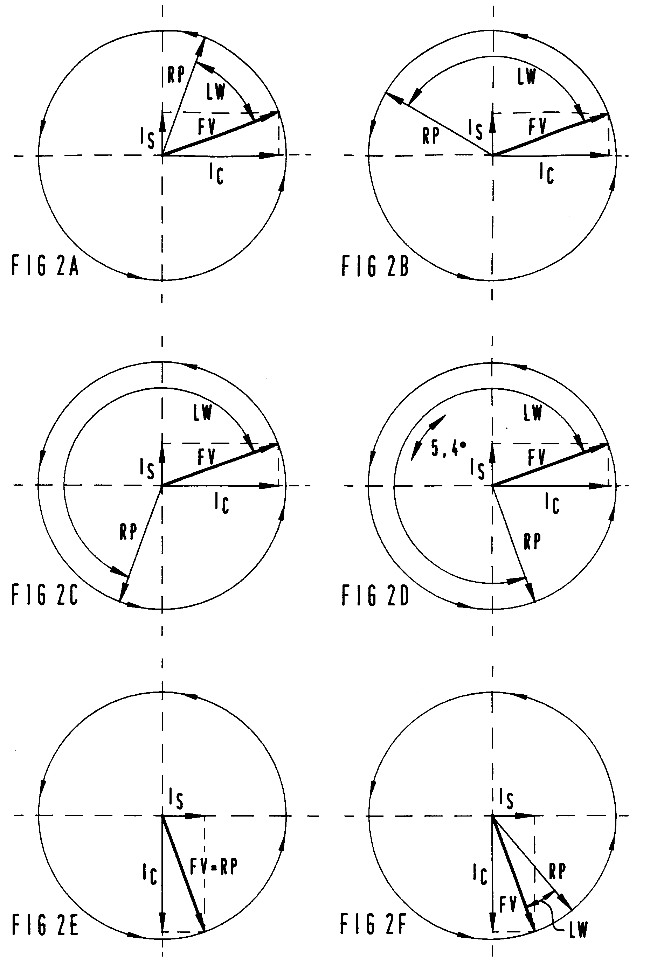

Eine graphische Darstellung nach Fig. 2 der Vorgänge beim Fangen soll den Fangvorgang in einer anderen Darstellungsweise erklären.

Nach den Fig. 2A bis 2C steht der Feldvektor FV still. Der Rotor hat jedoch noch kinetische Energie und bewegt sich entgegen dem Uhrzeigersinn weiter, während der Lastwinkel LW zwischen Rotor- und Feldvektorstellung sich ständig vergrößert. In der Stellung nach Fig. 2D erreicht der Rotor beispielsweise eine vorher festgelegte Lastwinkelgrenze (hier 5,4 Grad) und damit die Fanggrenze. Bei dieser Grenze schaltet die Schaltereinrichtung 3 nach Fig. 1 in den Fangbetrieb (Signalpfad F in Fig. 1) um. Damit wird der Feldvektor FV einmalig auf die Position des Rotors gesetzt durch entsprechende Ausgabe der Ströme Is, Ic in der Einrichtung 7 für die Teilwicklungen des Schrittmotors, wodurch der Lastwinkel LW zu Null gemacht wird (Fig. 2E). In dieser Position ist die kinetische Energie des Rotors natürlich noch nicht beeinflußt, d.h. der Rotor bewegt sich weiter, wie in Fig. 2F gezeigt ist. Die Schaltereinrichtung 3 schaltet nun in den Normalbetrieb (Signalpfad N in Fig. 1) um, wobei der in Fig. 2F gezeigte Lastwinkel LW aufgrund der aus der Einrichtung 17 (Fig. 1) hergeleiteten Geschwindigkeit und Position des Rotors, die die Steuerung 2 (Fig.1) beeinflussen, zu Null gemacht wird, wodurch der Rotor in den Zielpunkt gesteuert wird.

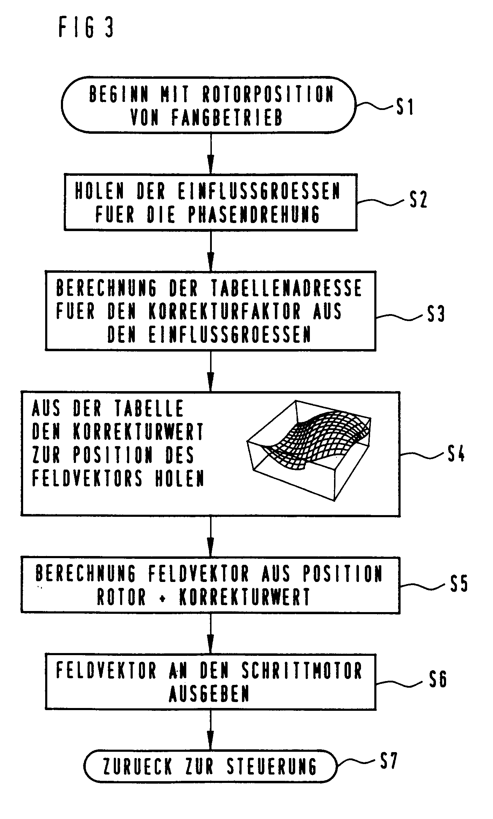

Das Flußdiagramm nach Fig. 3 soll den Korrekturvorgang verdeutlichen, der in der Einrichtung 18 von Fig. 1 stattfindet.

Die Routine beginnt mit Schritt S1, wo die Schaltereinrichtung 3 auf Fangbetrieb umgeschaltet hat. Zunächst werden in einem Schritt S2 die Einflußgrößen für die Phasenverschiebung ermittelt. Bei Schritt S3 wird die Tabellenadresse für den Korrekturfaktor aus den Einflußgrößen berechnet, wonach der Korrekturfaktor in einem anschließenden Schritt S4 zur Positionskorrektur des Feldvektors aus der Tabelle ausgelesen wird. Im Schritt S5 wird nun der neue Feldvektor aus der Rotorposition und dem Korrekturwert berechnet (Einrichtung 19 in Fig. 1) und über die Schaltereinrichtung 3 (Fig. 1) an die Ausgabeeinrichtung 4 in Schritt S6 abgegeben. Danach kehrt die Routine in Schritt S7 zur Steuerung zurück, d.h. die Schaltereinrichtung 3 schaltet in den Normalbetrieb um.

## Patentansprüche

1. Verfahren zur Beseitigung des instabilen Betriebszustandes eines Schrittmotors, der mit einer Stelleinrichtung in Verbindung steht, deren Lage über einen Lagerückmelder ermittelbar ist, wobei im stabilen Betriebszustand des Schrittmotors die Ansteuerung des Schrittmotors durch ein Steuerverfahren vorgenommen wird, **gekennzeichnet durch** folgende Verfahrensschritte:
- bei Abweichung der Rotorposition (RP) (Istwert) von der Position des Feldvektors (FW) (Sollwert) im instabilen Betriebszustand innerhalb einer vorgegebenen höchstzulässigen Grenze (Fanggrenze), die so festgelegt ist, daß die Toleranz des Lagerückmelders (13) innerhalb der Fanggrenze liegt, wird
-- in einem Rechner aufgrund der Information des Lagerückmelders (13) die Rotorposition (RP) ermittelt, und
-- die aktuelle Rotorgeschwindigkeit errechnet;
- aus den Daten der Rotorposition und der Rotorgeschwindigkeit wird ein Feldvektor (FV) ermittelt, wonach
- das System durch eine Schaltereinrichtung (3) von Normalbetrieb (Signalpfad N) auf Fangbetrieb (Signalpfad F) umgeschaltet wird, und
- der Feldvektor (FV) auf die Position des Rotors (RP) gesetzt wird,
- wonach anschließend die Schaltereinrichtung (3) auf Normalbetrieb (Signalpfad N) umschaltet und der Rotor des Schrittmotors (12) in den Zielpunkt gesteuert wird.

2. Verfahren nach Anspruch 1, dadurch gekennzeichnet, daß der Feldvektor (FV) durch eine Steuerung (2) aufgrund der ermittelten Geschwindigkeit des Rotors mit einer erhöhten oder verminderten Geschwindigkeit dem Rotor nachgeführt wird, um den Feldvektor (FV) von der auf die Position des Rotors (RP) gesetzten Position bis in den Zielpunkt zu führen.

3. Verfahren nach Anspruch 1, dadurch gekennzeichnet, daß die aktuelle Rotorgeschwindikeit aus der Differenz zwischen zwei oder mehreren Abtastzeiten ermittelten Abtastwerten des Lagerückmelders (13) im Rechner berechnet wird.

4. Verfahren nach Anspruch 1, dadurch gekennzeichnet, daß das Setzen des Feldvektors (FV) durch entsprechende Ausgabe der Ströme (Is, Ic) für die Teilwicklungen (10, 11) des Schrittmotors (12) vorgenommen wird.

5. Verfahren nach Anspruch 1, dadurch gekennzeichnet, daß im Rechner in einem Monitorsystem (14) die Rotorposition (RP) beobachtet wird und der Vergleich zwischen Soll- und Istwert vorgenommen wird, wobei die Monitoreinrichtung (14) die Schaltereinrichtung (3) von Normalbetrieb (N) auf Fangbetrieb (F) umschaltet, spätestens dann, wenn die Fanggrenze erreicht ist.

6. Verfahren nach Anspruch 1, dadurch gekennzeichnet, daß bei mehrmaligem Wiederholen der Verfahrensschritte eine dauerhafte Störung im System vorliegt.

7. Verfahren nach Anspruch 1, dadurch gekennzeichnet, daß die zu setzende Position des Feldvektors aufgrund systembedingter Einflußgrößen durch einen Korrekturwert (Ermittlungseinrichtung 18) korrigiert wird.

8. Verfahren nach Anspruch 7, dadurch gekennzeichnet, daß der Korrekturwert einem im Rechner abgelegten Kennlinienfeld entnommen wird.

9. Verfahren nach Anspruch 7, dadurch gekennzeichnet, daß eine Einflußgröße durch die Induktivität der Phasenwicklung des Schrittmotors gebildet wird.

10. Verfahren nach Anspruch 7, dadurch gekennzeichnet, daß eine Einflußgröße durch die Totzeit des Systems gebildet wird.

11. Verfahren nach Anspruch 7, dadurch gekennzeichnet, daß eine Einflußgröße durch die Versorgungsspannung des Systems gebildet wird.

12. Verfahren nach Anspruch 7, dadurch gekennzeichnet, daß eine Einflußgröße durch die Gegen-EMK des Systems gebildet wird.
